# EUROPÄISCHE PATENTSCHRIFT

(11) **EP 2 823 976 B1**
(45) Veröffentlichungstag und Bekanntmachung des Hinweises auf die Patenterteilung: **25.05.2016**
(21) Anmeldenummer: 14175286.5
(22) Anmeldetag: 01.07.2014
(51) Int. Cl.: B60G 21/055, B62D 21/11, B62D 27/00, B60G 3/24, B60K 17/24, B60G 3/20, B60G 7/00

(54) **Hilfsrahmen für ein Kraftfahrzeug**
Subframe for a motor vehicle
Faux-châssis pour un véhicule automobile

(30) Priorität: 11.07.2013 DE 102013011562
(43) Veröffentlichungstag der Anmeldung: 14.01.2015
(73) Patentinhaber: AUDI AG, 85045 Ingolstadt (DE)
(72) Erfinder: Leibl, Peter, 85077 Manching (DE)

(56) Entgegenhaltungen:
- EP-A1- 2 336 005
- EP-A1- 2 517 905
- WO-A1-2011/122012
- DE-A1-102006 001 709
- DE-A1-102011 112 053
- DE-C2- 4 408 573
- JP-A- H11 278 298
- JP-A- 2008 168 792
- US-A- 5 879 026

## Beschreibung

Die Erfindung betrifft einen Hilfsrahmen für ein Kraftfahrzeug, insbesondere bei einer Kraftfahrzeug-Hinterachse, nach dem Oberbegriff des Patentanspruches 1.

Ein im Fahrzeug verbauter gängiger U-förmiger Querstabilisator wirkt auf die links- und rechtsseitige Radaufhängung eines Kraftfahrzeuges. Dadurch werden größere Seitenneigungen der Fahrzeugkarosserie bei einer Kurvendurchfahrt vermieden. Zudem ist bekannt, einen solchen Querstabilisator in einer aktiven Fahrwerksregelung einzubinden, bei der der Stabilisator oder ein Stabilisatorteil mit einem Torsionsmoment beaufschlagbar ist. Auf diese Weise können je nach Ansteuerung das Fahrzeugniveau und/oder Nick- und Wankbewegungen des Fahrzeuges ausgeglichen werden.

Aus der DE 44 08 573 C2 ist ein gattungsgemäßer Hilfsrahmen für eine Fahrzeughinterachse bekannt. Der Hilfsrahmen trägt einen Kraftstofftank und ist in der Zusammenbaulage des Fahrzeugs über gummielastische Lager an den Karosserielängsträgern des Fahrzeugrohbaus befestigt. Zudem sind an dessen Längsträger beidseitig in der Fahrzeugquerrichtung nach außen führende Lenker angelenkt, die jeweils mit äußeren Radträgern verbunden sind. In der Fahrtrichtung betrachtet ist dem Hilfsrahmen ein U-förmiger Querstabilisator vorgelagert. Der Mittelabschnitt des Querstabilisators erstreckt sich in der Fahrzeugquerrichtung und ist über Drehlager am Hilfsrahmen drehgelagert. Zudem geht der Stabilisator im weiteren Querverlauf nach außen beidseitig jeweils in nach hinten abgewinkelte Abtriebsschenkel über. Die Abtriebsschenkel des U-förmigen Querstabilisators sind jeweils über eine Koppelstange am Radträger abgestützt.

In der DE 44 08 573 C2 ist der Querstabilisator in einem Bereich vor dem Hinterachs-Hilfsrahmen angeordnet. Dieser Bereich ist im Hinblick auf eine Packungsdichte besonders kritisch. Der Bauraum für den Querstabilisator ist daher nur unter konstruktiven Schwierigkeiten bereitstellbar.

Aus der DE 10 2011 112 053 A1 ist eine Einzelradaufhängung sowie ein Fahrschemel bekannt. Die Einzelradaufhängung weist einen Radträger auf, an dem eine gemeinsame Anbindungsstelle für den Drehstab-Stabilisator und für den Radführungslenker vorgesehen ist.

Aus der JP H 11278298 A ist ein Hilfsrahmen sowie ein Verfahren zur Montage eines Radaufhängungselementes bekannt. Aus der WO 2011/122012 A1 ist ein weiterer Fahrzeughilfsrahmen sowie ein Verfahren zur Herstellung eines solchen Hilfsrahmens bekannt. Aus der JP 2008 168 792 A ist eine Radaufhängungsstruktur für ein Fahrzeug bekannt, die einen, sich in der Fahrzeugquerrichtung erstreckenden Querträger aufweist. Aus der EP 2 336 005 A1 ist eine Anordnung von Stelleinheiten zum Lenken der Räder von Radaufhängungen für ein Kraftfahrzeug bekannt. Aus der EP 2 517 905 A1 ist eine Federungsanordnung für Radaufhängungen einer Fahrzeugachse bekannt, wobei jede Radaufhängung einen Drehsteller mit einer aktuatorbetätigbaren Drehstabfeder aufweist.

Die Aufgabe der Erfindung besteht darin, einen Hilfsrahmen für ein Kraftfahrzeug bereitzustellen, bei dem der Stabilisator bauraumgünstig angeordnet ist.

Die Aufgabe ist durch die Merkmale des Patentanpruches 1 gelöst. Bevorzugte Weiterbildungen der Erfindung sind in den abhängigen Ansprüchen offenbart.

Die Erfindung beruht auf dem Sachverhalt, dass die Bauräumverhältnisse im Bereich einer Fahrzeugachse sehr beengt sind. Vor diesem Hintergrund ist gemäß dem kennzeichnenden Teil des Patentanspruches 1 der Querträger als ein Hohlprofilteil ausgeführt. Dessen Hohlprofil ist so ausgelegt, dass darin zumindest teilweise der Stabilisator verläuft. Der Querträger weist somit eine Stabilisatorgasse auf, in der bauraumgünstig der Stabilisator angeordnet ist.

Die im Querträger ausgebildete Stabilisatorgasse kann im Querschnitt offen oder geschlossen gestaltet sein. Bei einem offenen Querschnitt ist die Montage bzw. Demontage des Stabilisators vereinfacht. Bei einem geschlossenen Querschnitt ist dagegen der Stabilisator vor äußeren mechanischen Einflüssen geschützt, etwa Steinschlag während des Fahrbetriebes. Beispielhaft kann die Stabilisatorgasse im Querträger einen, in der Fahrzeugquerrichtung durchgängigen U-profilförmigen Querschnitt aufweisen. Je nach Gegebenheiten kann die U-profilförmige Stabilisatorgasse nach oben bzw. unten oder nach vorne bzw. nach hinten offen profiliert sein. Zur Bildung einer im Querschnitt geschlossenen Stabilisatorgasse kann ein Deckelelement bereitgestellt werden, dass zum Beispiel auf den freien Rändern der U-Schenkel des Querträgers positionierbar sind.

Die im Querträger ausgebildete Stabilisatorgasse kann in der Fahrzeugquerrichtung betrachtet sich bis zum Hilfsrahmen-Eckbereich erstrecken und dort mittels des jeweiligen Längsträgers begrenzt sein. Bevorzugt kann der Stabilisator mit seinem Mittelabschnitt sich bauraumgünstig innerhalb der Stabilisatorgasse erstrecken. Der Stabilisator kann im weiteren Verlauf in der Fahrzeugquerrichtung nach außen in einen Seitenabschnitt übergehen, der am Hilfsrahmen-Eckbereich mit einem Versatzmaß, zum Beispiel einem Vertikalversatz oder auch einem Horizontalversatz aus der Stabilisatorgasse herausgeführt sein. Bevorzugt ist der Seitenabschnitt des Stabilisators mit einem Vertikalversatz nach unten aus der Stabilisatorgasse herausgeführt. In diesem Fall ist es weiter bevorzugt, wenn der aus der Stabilisatorgasse herausgeführte Seitenabschnitt des Stabilisators den Längsträger in der Fahrzeugquerrichtung im weiteren Verlauf nach außen unterquert und mittelbar oder unmittelbar in Wirkverbindung mit dem Radträger oder Lenkern gebracht ist.

Zum Ausgleich von Nick- oder Wankbewegungen des Fahrzeuges werden über den Stabilisator Torsionsmomente in Fahrzeugquerrichtung übertragen. Hierzu ist es erforderlich, den Stabilisator in entsprechenden Stabilisatorlagern am Fahrzeugaufbau drehzulagern. Die hierzu erforderlichen Stabilisatorlager können gegebenenfalls innerhalb der Stabilisatorgasse montiert werden. Alternativ dazu können die Stabilisatorlager auch außerhalb der Stabilisatorgasse angeordnet sein, und zwar bevorzugt in der Fahrzeugquerrichtung außerhalb der Stabilisatorgasse an den jeweiligen seitlichen Längsträgern.

Der mit der Stabilisatorgasse ausgebildete Querträger ist als ein vorderer Querträger in einem Hinterachs-Hilfsrahmen verbaut. Der Hinterachs-Hilfsrahmen kann beispielhaft ein, mit einer Kardanwelle antreibbares Hinterachsdifferenzial tragen. Die Kardanwelle erstreckt sich im Stand der Technik in gängiger Weise unterhalb des vorderen Querträgers in der Fahrzeuglängsrichtung bis zum Hinterachsdifferenzial. Im Gegensatz dazu kann sich die Kardanwelle erfindungsgemäß oberhalb des vorderen Querträgers der Hinterachse bis zum Hinterachsdifferenzial erstrecken bzw. ist das Hinterachsdifferenzial mit seiner Eingangsseite oberhalb des vorderen Querträgers angeordnet. Hierzu kann der vordere Querträger an seiner Oberseite einen nach oben offenen Längsdurchlass für die Kardanwelle bzw. für die Eingangsseite des Hinterachs-Differenzials aufweisen.

Die Stabilisatorgasse des Querträgers ist geometrisch derart ausgelegt, dass sich der Stabilisator im Betrieb berührungsfrei elastisch verformen kann.

Der Stabilisator kann in einer Ausführungsform ein einteiliger, U-förmiger Querstabilisator sein, der sich durchgängig in der Fahrzeugquerrichtung zwischen den beiden Fahrzeugseiten erstreckt und mittelbar oder ummittelbar an Radführungselementen einer Radaufhängung angelenkt ist. Alternativ dazu ist von der Erfindung ein in einer aktiven Fahrwerksregelung eingebundener Stabilisator umfasst, bei der zumindest ein elektrisch ansteuerbarer Drehaktuator den Stabilisator mit einem zusätzlichen Torsionsmoment beaufschlagen kann. Auf diese Weise kann der Stabilisator je nach Erfordernis aufgezogen oder entspannt werden. Beispielhaft kann der Stabilisator zweiteilig ausgeführt sein, und zwar mit einem Drehaktuator je Fahrzeugseite. Jeder der Drehaktuatoren kann über einen Drehfederstab sowie einen davon abgewinkelten Abtriebshebel Stellkräfte auf ein Radaufhängungselement der linksseitigen oder rechtsseitigen Radaufhängung aufbringen.
Die Drehaktuatoren sind bevorzugt zumindest teilweise insbesondere vollständig in der Stabilisatorgasse angeordnet.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Ansicht von unten eine Fahrzeug-Hinterachse gemäß einem ersten Ausführungsbeispiel;
- Fig. 2: eine vergrößerte Teilschnittdarstellung entlang der Schnittebene I-I aus der Fig. 1;
- Fig. 3: eine vergrößerte Teilschnittdarstellung entlang der Schnittebene II-II aus der Fig. 2; und
- Fig. 4: in einer der Fig. 1 entsprechenden Ansicht ein zweites Ausführungsbeispiel.

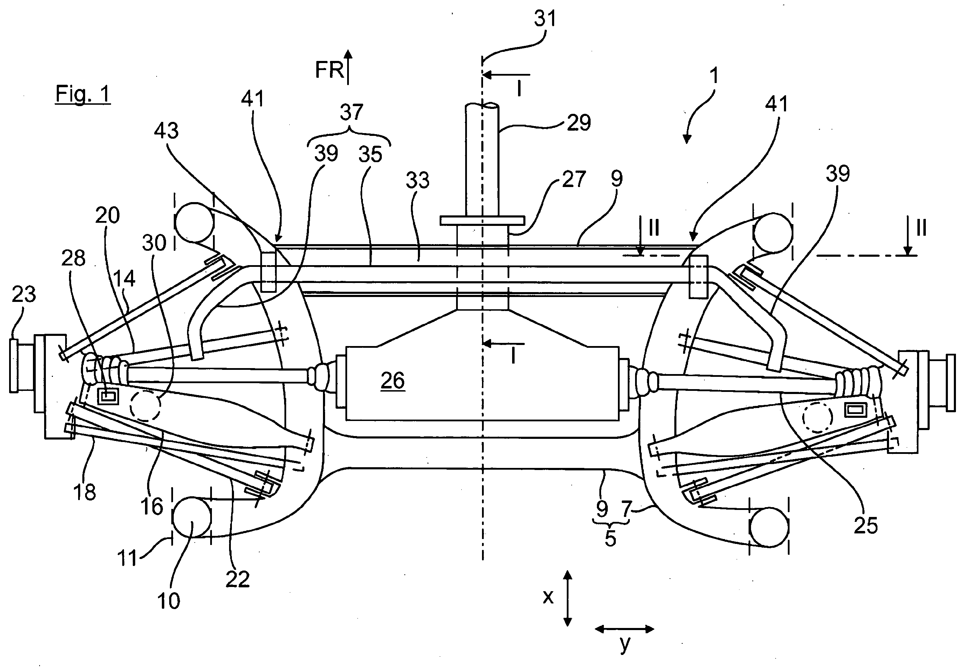

In der Fig. 1 ist in einer Ansicht von unten eine Hinterachse 1 für ein Kraftfahrzeug dargestellt, die nur insoweit gezeigt ist, als es für das Verständnis der Erfindung erforderlich ist. Die Hinterachse 1 weist einen Hilfsrahmen 5 auf, der aus Längsträgern 7 sowie aus vorderen und hinteren Querträgern 9 aufgebaut ist. Der Hilfsrahmen 5 ist im Fahrzeugrohbau über Lagerstellen 10 an nur gestrichelt angedeuteten Karosserie-Längsträgern 11 montiert. An den beiden Längsträgern 7 des Hilfsrahmens 5 sind für die Radaufhängung an den beiden Fahrzeugseiten jeweils untere Lenker 14, 16, 18 sowie obere Lenker 20, 22 in räumlich versetzter Anordnung über nicht dargestellte Lenkerlager angelenkt. Die Lenker 14 bis 16 erstrecken sich in der Fahrzeugquerrichtung y nach außen bis zum jeweiligen Radträger 23, der jeweils ein rechtes/linkes nicht gezeigtes Hinterrad trägt. Im vorliegenden Ausführungsbeispiel sind die beiden Hinterräder durch eine Gelenkwelle 25 angetrieben, die in ein, am Hilfsrahmen 5 angehängtes, nur angedeutetes Hinterachs-Differenzial 26 geführt ist. Der in der Fahrzeuglängsrichtung x nach vorne abragende Getriebeeingang 27 des Hinterachsdifferenzials 26 ist mit einer angedeuteten Kardanwelle 29 trieblich verbunden. Der oben beschriebene Aufbau der Fahrzeug-Hinterachse 1 ist mit Bezug auf eine vertikale Fahrzeugmittellängsebene 31 im Wesentlichen spiegelsymmetrisch ausgeführt, mit Ausnahme einer in den Figuren nicht dargestellten Durchführung für die Abgasanlage.

Gemäß den Figuren ist der vordere Querträger 9 des Hilfsrahmens 5 als ein Hohlprofilteil ausgeführt. Das Hohlprofil weist einen nach unten in Richtung Fahrbahn offenen U-förmigen Querschnitt auf. Das Hohlprofil des vorderen Querträgers 9 ist geometrisch derart ausgelegt, dass es als Stabilisatorgasse 33 nutzbar ist, in der ein Mittelabschnitt 35 eines Stabilisator 37 verläuft. Im vorliegenden Ausführungsbeispiel ist der Stabilisator 37 einteilig sowie U-förmig hergestellt, und zwar mit dem bereits erwähnten Mittelabschnitt 35, der in der Fahrzeugquerrichtung y nach außen materialeinheitlich in Abtriebshebel 39 übergeht, die in der Fahrzeuglängsrichtung y nach hinten abragen. Die Abtriebshebel 39 des Querstabilisators 37 sind in der Fig. 1 auf dem Lenker 20 abgestützt.

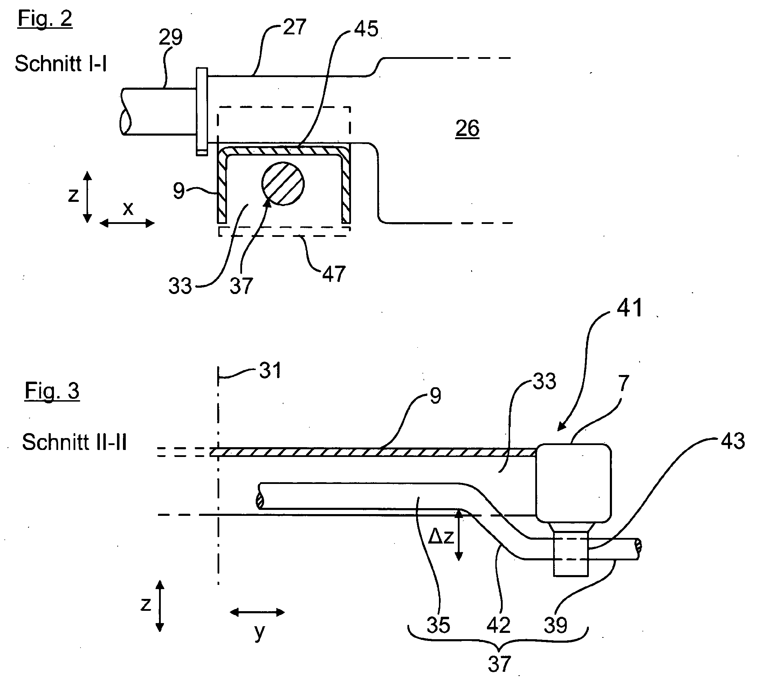

Wie aus der Fig. 2 hervorgeht, weist die Stabilisatorgasse 33 einen, in der Fahrzeugquerrichtung y durchgängigen U-profilförmigen Querschnitt auf. Der Mittelabschnitt 35 des Stabilisators 37 erstreckt sich bis unmittelbar in den Hilfsrahmen-Eckbereich 41, an dem der Querträger 9 mit dem seitlichen Längsträger 7 zusammenläuft. Die Stabilisatorgasse 33 ist dabei in der Fahrzeugquerrichtung y vom Längsträger 7 begrenzt, wie es in der Fig. 3 dargestellt ist. Im, in der Fig. 3 gezeigten Hilfsrahmen-Eckbereich 41 ist der Mittelabschnitt 35 des Querstabilisators 37 mit einem S-Schlag 42 über einen Vertikalversatz Δz nach unten aus der Stabilisatorgasse 33 herausgeführt. Der S-Schlag 42 geht in den Längsarm 39 über, der auf dem Lenker 20 abgestützt ist.

Die Seitenabschnitte 42 des Stabilisators 37 sind in je einem Stabilisatorlager 43 drehgelagert. Das Stabilisatorlager 43 ist im vorliegenden Ausführungsbeispiel nicht innerhalb, sondern außerhalb der Stabilisatorgasse 33 angeordnet. Aufgrund ihrer Anordnung außerhalb der Stabilisatorgasse 33 kann der freien Querschnitt der Stabilisatorgasse 33 entsprechend gering gehalten werden.

Wie aus der Fig.'2 weiter hervorgeht, ist der Getriebeeinlass 27 des Hinterachs-Differenzials 26 sowie die damit trieblich verbundene Kardanwelle 31 oberhalb des vorderen Querträgers 9 positioniert. Hierzu ist an der Oberseite des vorderen Querträgers 9 ein nach oben offener, in etwa U-förmiger Längsdurchlass 45 eingeformt. Gemäß der Fig. 2 ist der nach unten offene Querschnitt der Stabilisatorgasse mit einem gestrichelt dargestellten Deckel 47 begrenzt. Auf diese Weise ist der Stabilisator 37 vor äußeren mechanischen Einflüssen, etwa Steinschlag geschützt. Dadurch entfällt eine gegebenenfalls erforderliche kostenintensive Oberflächenbehandlung des Stabilisators 37. In der Fig. 2 ist der Stabilisator 37 um einen Höhenversatz unterhalb des Getriebeeingangs 27 des Hinterachs-Differenzials angeordnet, und zwar so, dass im Fahrzeugbetrieb eine berührungsfreie elastische Verformung des Stabilisators 37 in der Stabilisatorgasse 33 gewährleistet ist.

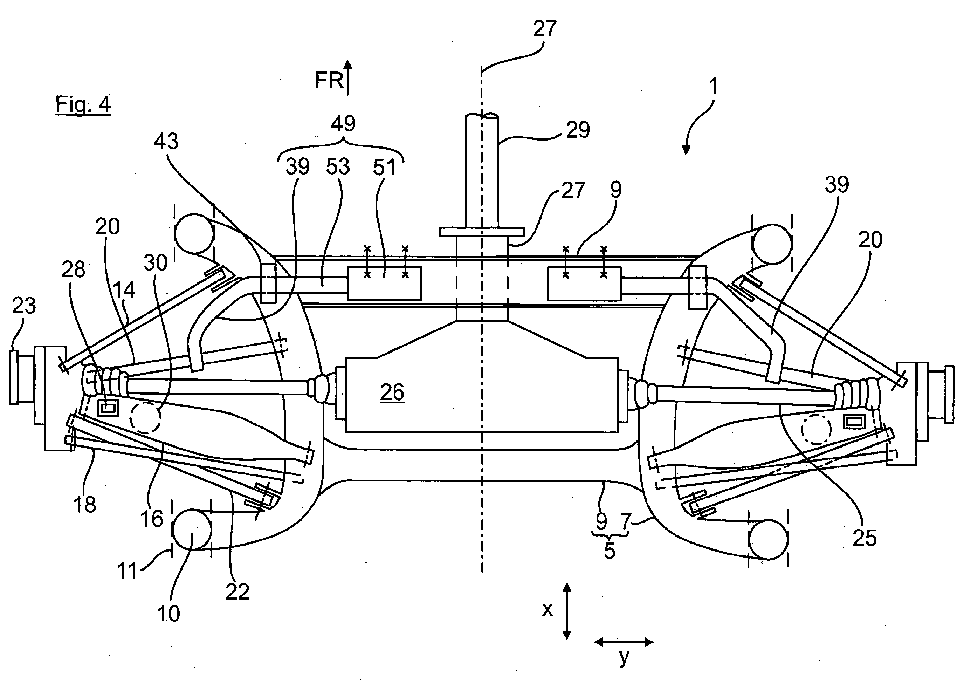

In der Fig. 4 ist eine Fahrzeug-Hinterachse gemäß einem zweiten Ausführungsbeispiel gezeigt. Der grundsätzliche Aufbau der Fahrzeug-Hinterachse ist im Wesentlichen baugleich mit dem ersten Ausführungsbeispiel. Im Unterschied zum ersten Ausführungsbeispiel ist anstelle des einteiligen Stabilisators 37 ein zweiteiliger Stabilisator 37 mit voneinander unabhängigen Stabilisatorteilen 49 vorgesehen. Jedes der beiden Stabilisatorteile 49 weist einen von der Fahrwerksregelung elektrisch ansteuerbaren Drehaktuator 51 auf, der in der Fahrzeugquerrichtung y nach außen über einen Drehfederstab 53 in die nach hinten abragenden Abtriebshebel 39 übergeht. Der jeweilige Drehfederstab 51 ist in den Stabilisatorlagern 43 drehgelagert. Die beiden Stabilisatorteile 49 sind mit Bezug auf die Fahrzeugmittellängsebene 31 spiegelsymmetrisch angeordnet. Die Drehaktuatoren 51 sind dabei innerhalb der Stabilisatorgasse 33 am vorderen Querträger 9 montiert.

## Patentansprüche

1. Hilfsrahmen für ein Kraftfahrzeug zur Anlenkung von Radaufhängungselementen (14 bis 22) und zur Lagerung eines in der Fahrzeugquerrichtung (y) verlaufenden Stabilisators (37), mit seitlichen in der Fahrzeuglängsrichtung (x) verlaufenden Längsträgern (7) und zumindest einem vorderen Querträger (9), der die beiden Längsträger (7) in der Fahrzeugquerrichtung (y) verbindet, wobei der vordere Querträger (9) ein Hohlprofilteil ist, dessen Hohlprofil eine Stabilisatorgasse (33) bildet, in der zumindest teilweise, insbesondere durchgängig zwischen den beiden Längsträgern (7), der Stabilisator (37) verläuft, **dadurch gekennzeichnet, dass** der Hilfsrahmen (1) an der Fahrzeug-Hinterachse ein mit einer Kardanwelle (29) antreibbares Hinterachsdifferenzial (26) trägt, und dass der vordere Querträger (9) einen mit Bezug auf die Stabilisatorgasse (33) höhenversetzten Längsdurchlass (45) für die Kardanwelle (29) aufweist.

2. Hilfsrahmen nach Anspruch 1, **dadurch gekennzeichnet, dass** die Stabilisatorgasse (33) im Querschnitt offen oder geschlossen ausgebildet ist, insbesondere mit einem in der Fahrzeugquerrichtung (y) durchgängigen U-profilförmigen Querschnitt, und dass insbesondere der U-profilförmig offene Querschnitt der Stabilisatorgasse (33) von einem Deckelelelement (47) schließbar ist.

3. Hilfsrahmen nach Anspruch 1 oder 2, **dadurch gekennzeichnet, dass** die Stabilisatorgasse (33) des vorderen Querträgers (9) in der Fahrzeughochrichtung (z) nach oben oder nach unten offen ist, oder alternativ in der Fahrzeuglängsrichtung (x) nach vorne oder hinten offen ist.

4. Hilfsrahmen nach einem der Ansprüche 1, 2 oder 3, **dadurch gekennzeichnet, dass** die Stabilisatorgasse (33) in der Fahrzeugquerrichtung (y) im Hilfsrahmen-Eckbereich (41) mittels eines Längsträgers (7) begrenzt ist.

5. Hilfsrahmen nach Anspruch 4, **dadurch gekennzeichnet, dass** der Stabilisator (37) zumindest einen Seitenabschnitt (42) aufweist, der am Hilfsrahmen-Eckbereich (41) mit einem Vertikalversatz (Δz) nach unten aus der Stabilisatorgasse (33) herausgeführt ist, und/oder dass der Seitenabschnitt (42) des Stabilisators (37) den Längsträger (7) in der Fahrzeugquerrichtung (y) unterquert.

6. Hilfsrahmen nach einem der vorhergehenden Ansprüche, **dadurch gekennzeichnet, dass** der Stabilisator (37) in Stabilisatorlagern (43) drehgelagert ist, und dass die Stabilisatorlager (43) in der Fahrzeugquerrichtung (y) außerhalb der Stabilisatorgasse (33) angeordnet sind.

7. Hilfsrahmen nach einem der vorhergehenden Ansprüche, **dadurch gekennzeichnet, dass** der Längsdurchlass (45) für die Kardanwelle (29) eine in der Querträger-Oberseite ausgebildete, nach oben offene Vertiefung ist.

8. Hilfsrahmen nach einem der vorhergehenden Ansprüche, **dadurch gekennzeichnet, dass** der Stabilisator (37) innerhalb der Stabilisatorgasse (33) des Querträgers (9) berührungsfrei verläuft.

9. Hilfsrahmen nach einem der vorhergehenden Ansprüche, **dadurch gekennzeichnet, dass** der Stabilisator (37) ein Bestandteil einer aktiven Fahrwerksregelung ist, bei der zumindest ein, insbesondere elektrisch ansteuerbarer Drehaktuator (51) den Stabilisator (37) mit einem Torsionsmoment beaufschlagen kann, und dass insbesondere der Drehaktuator (51) zumindest teilweise, insbesondere vollständig in der Stabilisatorgasse (33) angeordnet ist.

## Claims

1. Subframe for a motor vehicle for pivotally connecting wheel suspension elements (14 to 22) and for supporting a stabiliser (37) which extends in a transverse direction of the motor vehicle (y), comprising lateral longitudinal members (7) extending in a longitudinal direction (x) of the motor vehicle and at least one front cross member (9) connecting the two longitudinal members (7) in the transverse direction of the vehicle (y), wherein the front cross member (9) is a hollow profile part, the hollow profile of which forms a stabiliser groove (33), in which the stabiliser (37) runs at least partly, in particular continuously between the two longitudinal members (7), **characterised in that** the subframe (1) on the rear vehicle axis supports a rear axle differential (26) driven by a cardan shaft (29) and **in that** the front cross member (9) has a longitudinal passage (45) for the cardan shaft (29) which is vertically offset relative to the stabiliser groove (33).

2. Subframe according to claim 1, **characterised in that** the stabiliser groove (33) is open or closed in cross-section, in particular has a continuous U-profileshaped cross-section in the transverse direction of the vehicle (y) and **in that** in particular the U-profileshaped open cross-section of the stabiliser groove (33) can be closed by a cover element (47).

3. Subframe according to either claim 1 or claim 2, **characterised in that** the stabiliser groove (33) of the front cross member (9) in the vertical direction of the vehicle (z) is open to the top or to the bottom, or alternatively is open to the front or back in the longitudinal direction of the vehicle (x).

4. Subframe according to any one of the claims 1, 2 or 3, **characterised in that** the stabiliser groove (33) in the transverse direction of the vehicle (y) is delimited in the subframe corner region (41) by means of a longitudinal member (7).

5. Subframe according to claim 4, **characterised in that** the stabiliser (37) comprises at least one side section (42) which on the subframe corner region (41) is guided with a vertical offset (Δz) downwards out of the stabiliser groove (33) and/or **in that** the side section (42) of the stabiliser (37) crosses under the longitudinal member (7) in the transverse direction of the vehicle (y).

6. Subframe according to any one of the preceding claims, **characterised in that** the stabiliser (37) is rotary mounted in the stabiliser bearings (43) and **in that** the stabiliser bearings (43) are arranged in the transverse direction of the vehicle (y) outside the stabiliser groove (33).

7. Subframe according to any one of the preceding claims, **characterised in that** the longitudinal passage (45) for the cardan shaft (29) is a depression formed in a top side of the cross member and open at the top.

8. Subframe according to any one of the preceding claims, **characterised in that** the stabiliser (37) runs without contact inside the stabiliser groove (33) of the cross member (9).

9. Subframe according to any one of the preceding claims, **characterised in that** the stabiliser (37) is a component of an active chassis control, in which at least one, in particular electrically controllable rotary actuator (51) can load the stabiliser (37) with a torsion moment and **in that** in particular the rotary actuator (51) is arranged at least partly, in particular fully in the stabiliser groove (33).

## Revendications

1. Faux-châssis pour un véhicule automobile pour la liaison articulée d'éléments de suspension de roue (14 à 22) et pour le logement d'un stabilisateur (37) s'étendant dans la direction transversale de véhicule (y), avec des longerons (7) latéraux s'étendant dans la direction longitudinale de véhicule (x) et avec au moins une traverse avant (9) qui relie les deux longerons (7) dans la direction transversale de véhicule (y), la traverse avant (9) étant une pièce profilée creuse dont le profil creux forme un passage de stabilisateur (33) dans lequel le stabilisateur (37) s'étend au moins en partie, notamment sur toute la longueur entre les deux longerons (7), **caractérisé en ce que** le faux-châssis (1) supporte sur l'essieu arrière de véhicule un différentiel d'essieu arrière (26) pouvant être entraîné avec un arbre à cardan (29) et **en ce que** la traverse avant (9) comporte un passage longitudinal (45), décalé en hauteur par rapport au passage de stabilisateur (33), pour l'arbre à cardan (29).

2. Faux-châssis selon la revendication 1, **caractérisé en ce que** le passage de stabilisateur (33) est conçu avec une section transversale ouverte ou fermée, notamment avec une section transversale avec un profil en U sur toute sa longueur dans la direction transversale de véhicule (y), et **en ce que** notamment la section transversale ouverte en U du passage de stabilisateur (33) peut être fermée par un élément formant couvercle (47).

3. Faux-châssis selon la revendication 1 ou 2, **caractérisé en ce que** le passage de stabilisateur (33) de la traverse avant (9) est ouvert vers le haut ou vers le bas dans la direction verticale de véhicule (z) ou **en ce que**, selon une variante, il est ouvert vers l'avant ou vers l'arrière dans la direction longitudinale de véhicule (x).

4. Faux-châssis selon l'une des revendications 1, 2 ou 3, **caractérisé en ce que**, dans la zone d'angle de faux-châssis (41), le passage de stabilisateur (33) est limité dans la direction transversale de véhicule (y) au moyen d'un longeron (7).

5. Faux-châssis selon la revendication 4, **caractérisé en ce que** le stabilisateur (37) comporte au moins un tronçon latéral (42) qui sort du passage de stabilisateur (33) vers le bas au niveau de la zone d'angle de faux-châssis (41) avec un décalage vertical (Δz) et/ou **en ce que** le tronçon latéral (42) du stabilisateur (37) croise le longeron (7) en passant en dessous dans la direction transversale de véhicule (y).

6. Faux-châssis selon l'une des revendications précédentes, **caractérisé en ce que** le stabilisateur (37) est logé de manière à pouvoir tourner dans des paliers de stabilisateur (43) et **en ce que** les paliers de stabilisateur (43) sont agencés en dehors du passage de stabilisateur (33) dans la direction transversale de véhicule (y).

7. Faux-châssis selon l'une des revendications précédentes, **caractérisé en ce que** le passage longitudinal (45) pour l'arbre à cardan (29) est un creux conçu dans le dessus de traverse et ouvert vers le haut.

8. Faux-châssis selon l'une des revendications précédentes, **caractérisé en ce que** le stabilisateur (37) s'étend sans contact à l'intérieur du passage de stabilisateur (33) de la traverse (9).

9. Faux-châssis selon l'une des revendications précédentes, **caractérisé en ce que** le stabilisateur (37) fait partie d'un système de contrôle de châssis actif tel qu'au moins un actionneur rotatif (51), pouvant notamment être commandé par des moyens électriques, peut imposer un moment de torsion au stabilisateur (37) et **en ce que** notamment l'actionneur rotatif (51) est agencé au moins en partie, notamment complètement, dans le passage de stabilisateur (33).
